# NEUE EUROPÄISCHE PATENTSCHRIFT

(11) **EP 1 972 191 B2**
(45) Veröffentlichungstag und Bekanntmachung des Hinweises auf die Entscheidung über den Einspruch: **03.12.2014**
(45) Hinweis auf die Patenterteilung: 08.09.2010
(21) Anmeldenummer: 07123612.9
(22) Anmeldetag: 19.12.2007
(51) Int. Cl.: A01D 43/08, A01F 29/12

(54) **Landwirtschaftliche Erntemaschine**
Agricultural harvester
Moissonneuse agricole

(30) Priorität: 20.03.2007 DE 102007013715
(43) Veröffentlichungstag der Anmeldung: 24.09.2008
(73) Patentinhaber: CLAAS Selbstfahrende Erntemaschinen GmbH, 33428 Harsewinkel (DE)
(72) Erfinder: Isfort, Heinrich, 48249, Dülmen (DE)

(56) Entgegenhaltungen:
- EP-A- 0 492 273
- DE-A1- 3 023 688
- DE-A1- 19 532 669
- J. DEERE: 'Selbstfahrende Feldhäcksler 6650, 6750, 6850 und 6950 (Seriennr. 504992-)' BETRIEBSANLEITUNG 2000,

## Beschreibung

Die Erfindung betrifft eine landwirtschaftliche Erntemaschine nach dem Oberbegriff des Anspruchs 1.

Bei landwirtschaftlichen Erntemaschinen, insbesondere bei selbstfahrenden Feldhäckslern kommt es hin und wieder zu Verstopfungen einerseits der Gutbearbeitungs- und/oder Gutförderelemente, wenn besonders problematisches Erntegut geerntet bzw, übermäßig hohe Erntegutmengen aufgenommen werden, Dadurch bedingt, kann es zu einem Abfall der Antriebsmotorleistung kommen, wobei dann die Wurfleistung der Gutbearbeitungsorgane, beispielhaft der Häckseltrommel nicht mehr ausreicht, um das Häckselgut bis zu den nachfolgenden Gutbearbeitungsorganen zu befördern. Teilweise sind solche Verstopfungen durch bekannte motorgetriebene Reversiereinrichtungen zu lösen, jedoch kann häufig nicht das gesamte Häckselgut aus dem sich der Häckseltrommel anschließenden Erntegutförderschacht beseitigt werden und es verbleiben häufig Erntegutreste im Erntegutförderschacht, insbesondere im Bereich des Boden- bzw, Leitblechs zwischen Häckseltrommel und den Nachfolgeaggregaten, die unter Umständen dort antrocknen und im nachfolgenden Erntebetrieb Probleme bereiten können. Überdies erfordert diese Art Verstopfungen zu beseitigen einen hohen Zeitaufwand und somit eine längere Unterbrechung des Erntebetriebes.

Im weiteren ist es am selbstfahrenden Feldhäcksler der Firma CNH Baureihe FX bekannt, dass das Bodenblech im unteren Bereich der Häckseltrommel geöffnet werden kann. Nachteilig daran ist jedoch, dass das Bodenblech mit dem Gehäuse der Häckseltrommel verschraubt ist, so dass im Fall von auftretenden Verstopfungen bzw. Ablagerungen von Häckselgut ein schneller Zugang nicht möglich ist und somit zur Behebung längere Unterbrechungen des Erntebetriebes hingenommen werden müssen.

Demgemäss wird die der Erfindung zugrunde liegende Aufgabe darin gesehen, eine Vorrichtung innerhalb des Erntegutförderschachts einer landwirtschaftlichen Erntemaschine bereitzustellen, die die vorstehend genannten Probleme im Stand der Technik beseitigt und die Beseitigung von Verstopfungen bzw, Ablagerungen von Erntegut im Erntegutförderschacht auf besonders einfache Weise zulässt und keine längeren Unterbrechungen des Erntebetriebes erfordert.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln,

I ndem das im Bereich zwischen der Häckseltrommel und der nachgeordneten Nachzerkleinerungseinrichtung bodenseitig angeordnete Leitblech um eine horizontale Schwenkachse von einer geschlossenen in eine geöffnete Position verschwenkbar ist, wird sichergestellt, dass bei Verstopfungen dort entstehende Erntegutablagerungen bei geöffneter Position des Leitblechs nach unten herausfallen können. Vorzugsweise erstreckt sich dabei das Leitblech über die gesamte Bodenseite des Erntegutförderschachtes im Bereich zwischen der Häckseltrommel und der nachfolgenden Nachzerkleinerungseinrichtung, so dass eine möglichst große Auslassöffnung zum Herausfallen der Erntegutablagerungen vorhanden ist.

In vorteilhafter Weiterbildung der Erfindung befindet sich die Schwenkachse zum Verschwenken des Leitblechs an dessen oberen Ende, so dass bei Verstopfungen das sich in dem aufsteigend ausgebildeten Erntegutförderschacht schwerkraftbedingt im unteren Bereich des Förderschachtes aufstauende Erntegut auf kürzestern Weg bei geöffneter Position des Leitblechs aus dem Erntegutförderschacht herausfallen kann.

Dadurch, dass das Leitblech zum Verschwenken einen als Getriebesystem ausgebildeten Verschwenkmechanismus umfasst, kann besonders bedienerfreundlich das Verbringen des Leitblechs in die geöffnete Position erreicht werden. Ein zeitaufwendiges Lösen von Schraubfixierungen ist nicht mehr nötig, so dass zum Beheben von auftretenden Verstopfungen eine länger dauernde Unterbrechung des Erntebetriebes verhindert werden kann, Indem das Getriebesystem im Wesentlichen von wenigstens einem einen Endes über eine Haltevorrichtung mit dem Leitblech des Erntegutförderschachtes drehbar verbundenen Getriebeglied gebildet wird, welches anderen Endes über eine weitere Haltevorrichtung drehbar mit dem Rahmen verbunden ist, kann das Verschwenden des Leitblechs von der geschlossen in die geöffnete Position und umgekehrt auf konstruktiv einfache Weise erreicht werden. Das wenigstens eine Getriebeglied ist als teleskopierbares Stellglied ausgebildet, dass im einfachsten Fall als Hydraulikmotor oder als elektrischer und/oder elektronischer Linearmotor ausgeführt ist, so dass beim Auftreten von Verstopfungen ein schnelles Verschwenken von der geschlossenen in die geöffnete Position erreichbar ist

Das Verschwenken des Leitblechs von der geschlossenen in die geöffnete Position erfolgt, wenn die Häckseitrommel von der Antriebseinheit entkoppelt und/oder die Antriebseinheit abgeschaltet ist, so dass sichergestellt ist, dass wenn die Häckseltrommel in eine Außer-Betrieb Position gebracht wird und eventuell noch durch deren Nachlauf Erntegutreste in den Erntegutförderschacht befördert werden, jedoch nicht mehr in den Wirkbereich der nachfolgenden Bearbeitungsorgane gelangen, dann über das in die geöffnete Position verschwenkte Leitblech nach unten heraus fallen können. Andererseits kann es vorkommen, dass nach einem Erntebetrieb Erntegutab!agerungen im Erntegutförderschacht zwischen der Häckseltrommel und der nachfolgenden Nachzerkleinerungseinrichtung auftreten, die dann, indem das Leitblech nach jedem Abschalten der Antriebseinheit in die geöffnete Position verschwenkt wird, beseitigt werden können,

In vorteilhafter Weiterbildung der Erfindung ist das Verschwenken des Leitblechs von der geschlossenen in die geöffnete Position an den Reversiervorgang der Häckseltrommel gekoppelt, so dass noch möglicherweise während des Reversiervorgangs in den Erntegutförderschacht beförderte Erntegutreste über das geöffnete Leitblech nach unten aus dem Erntegutförderschacht herausfallen können,

Dadurch, dass das Verschwenken des Leitblechs von der geöffneten in die geschlossene Position während des Schleifens der an der Häckseltrommel angeordneten Häckseimesser erfolgt, kann im Fall, dass Wasser zum Schleifen verwendet wird, dieses durch die Öffnung im Erntegutförderschacht herauslaufen, so dass im Erntegutförderschacht keine Wasserrückstände verbleiben, die ein verstärktes Anhaften des Erntegutes im Erntegutförderschacht bewirken können, Andererseits können Reste vom Schleifstein aus dem Erntegutförderschacht herausfallen, so dass diese nicht mit in das Erntegut gelangen,

Indem wenigstens ein Sensor an zumindest einer Stelle innerhalb des Häckseltrommelgehäuses angebracht ist und der Sensor als Körperschallempfänger betreibbar ist wobei das Verschwenken des Leitblechs von der geöffneten in die geschlossene Position aufgrund des von dem Sensor generierten Sensorsignals erfolgt, können durch den Sensor registrierte Fremdkörper durch die Auslassöffnung des sich in der geöffneten Position befindenden Leitblechs herausfallen und somit größere Schäden an den nachfolgenden Bearbeitungsorganen verhindert werden.

In einer weiteren vorteilhaften Ausgestaltung der Erfindung ist wenigstens an der Häckseltrommel und/oder an den nachfolgenden Bearbeitungsorganen wenigstens ein Sensor zur Erkennung des Drehmomentes angeordnet, wobei beim Überschreiten eines vorab definierten Drehmoments das Verschwenken des Leitblechs von der geschlossenen in geöffnete Position erfolgt, so dass sichergestellt ist, dass möglicherweise infolge von Überlastungen der Arbeitsorgane sich ergebende Erntegutstauungen frühzeitig erkannt bzw. verhindert werden können, indem das Erntegut dann, bevor es den Erntegutförderschacht verstopft über das geöffnete Leitblech herausfallen kann.

Im einfachsten Fall erfolgt das Verschwenken manuell vom Bediener oder automatisch mittels einer Auswerte- und Steuereinrichtung, vorzugsweise ist innerhalb der dem Feldhäcksler zugeordneten Fahrerkabine eine Bedieneinheit zur Bedienung des Verschwenkmechanismus vorgesehen, so dass der Bediener jederzeit ein manuelles Verschwenken des Leitblechs von der geschlossenen in die geöffnete Position und umgekehrt vornehmen kann, um auf sich anbahnende Verstopfungen im Erntegutförderschacht jederzeit schnell reagieren zu können,

Weitere vorteilhafte Ausgestaltungen sind Gegenstand weiterer Unteransprüche und werden nachfolgend an Hand von Zeichnungen näher erläutert

Im folgenden wird die Erfindung anhand eines Ausführurigsbeispiels dargestellt Es zeigen:
- Figur 1: einen selbstfahrenden Feldhäcksler in Seitenansicht
- Figur 2: eine vergrößerte Darstellung des in der Fig. 1 mit "A" gekennzeichneten Bereichs mit dem verschwenkbaren Leitblech in geöffneter Position
- Figur 3: eine vergrößerte Darstellung des in Fig. 1 mit "A" gekennzeichneten Bereichs mit dem verschwenkbaren Leitblech in geschlossener Position

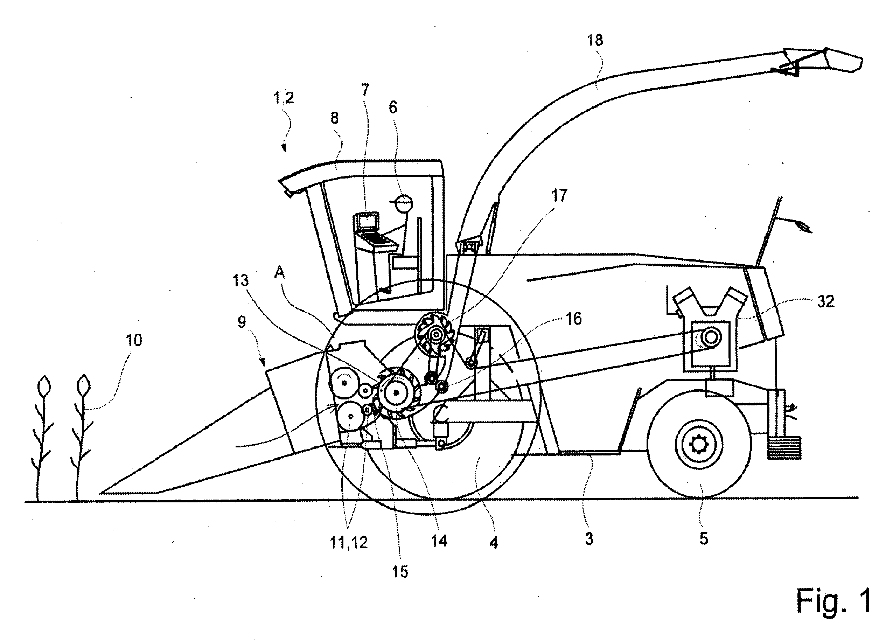

Figur 1 zeigt eine als selbstfahrender Feldhäcksler 1 ausgeführte landwirtschaftliche Erntemaschine 2 in Seitenansicht und Schnittdarstellung. Diese baut sich auf einen Rahmen 3 auf, der von vorderen und rückwärtigen Rädern 4, 5 getragen wird, Die Bedienung des Feldhäckslers 1 erfolgt vom Bediener 6 über eine Bedieneinheit 7 von der Fahrerkabine 8 aus, von der aus, das dem Feldhäcksler 1 frontseitig zugeordnete Vorsatzgerät 9 einsehbar ist, welches im Arbeitsbetrieb des Feldhäckslers 1 Erntegut 10 aufnimmt, schneidet und es den nachgeordneten Einzugs- und Vorpresswalzen 11, 12 zuführt. Die Einzugs- und Vorpresswalzen 10, 11 leiten das Erntegut 9 der nachgeordneten und rotierenden, mit Messern 13 besetzten Häckseltrommel 14 zu, welche das Erntegut 10 an einer Gegenschneide 15 zerkleinert, Das zerkleinerte Erntegut 10 wird sodann an eine Nachzerkleinerungseinrichtung 16 übergeben, bevor es von dem Nachbeschieunigungsorgan 17 angenommen wird, Aufgabe der Nachzerkleinerungseinrichtung 16 ist, bei der Ernte von Maispflanzen die Maiskörner anzuschlagen, Die Nachzerkleinerungseinrichtung 16 kann daher auch vollständig weggelassen werden, soweit ein ,Anschlagen des Erntegutes 10 - wie beispielsweise bei Gras - nicht erforderlich ist. Von dem Nachbeschleunigungsorgan 17 erfährt das gehäckselte Erntegut 10 eine Beschleunigung, damit ein sicherer Austritt aus der dem Nachbeschleunigungsorgan 17 nachgeordneten Überladevorrichtung 18 in ein hier nicht näher dargestelltes Transportfahrzeug gewährleistet wird. Der Antrieb der o.g. Bearbeitungsorgane erfolgt über die im rückwärtigen Bereich vorhandene Antriebseinheit 32.

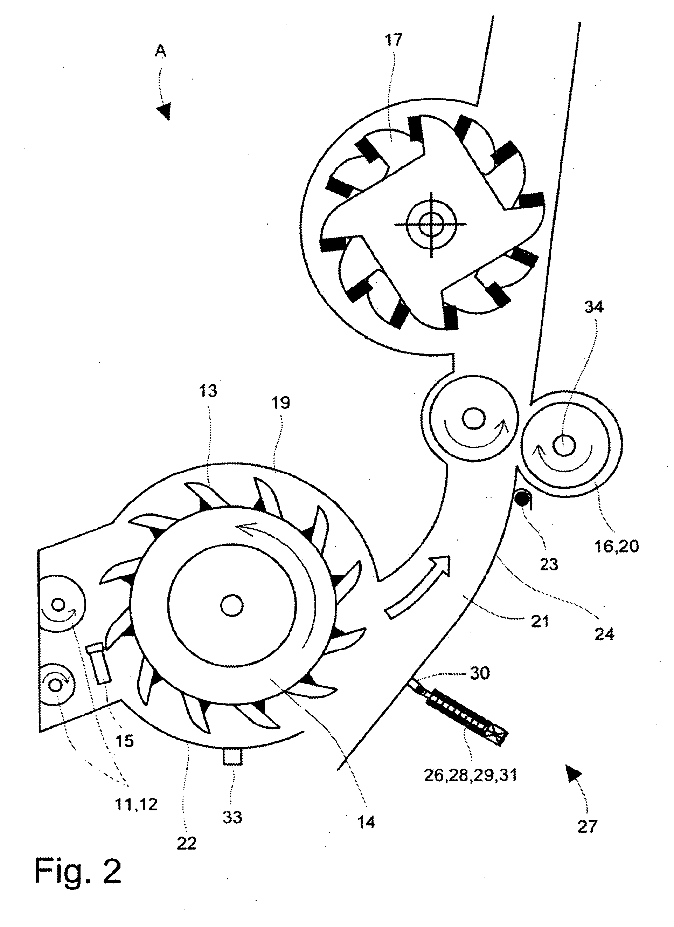

Fig. 2 zeigt nun in vergrößerter Schnittdarstellung den in Fig. 1 mit A gekennzeichneten Bereich, der in Pfeilrichtung erfolgender Gutflusslinie, eine in einem Hackseltrommelgehäuse 19 gelagerte Häckseltrommel 14, eine Nachzerkleinerungseinrichtung 16 in Form von Konditionierwalzen 20 und ein Nachbeschleunigungsorgan 17. Die Konditionierwalzen 20 übergeben das gehäckselte Erntegut 10 an das Nachbeschleunigungsorgan 17, um von dort aus über die horizontal und vertikal verstellbare in Fig, 1 dargestellte Überladebvorrichtung 18 auf eine nicht abgebildete, der Überladevorrichtung 18 zugeordnete Transportvorrichtung gefördert zu werden. Hierbei durchströmt das gehäckseite Erntegut 10 den zwischen der Häckseltrommel 14 und der Nachzerkleinerungseinrichtung 16 sich befindenden Erntegutförderschacht 21. Bodenseitig weist das Häckseltrommelgehäuse 19 ein Bodenblech 22 auf, dem sich oberhalb ein um die Schwenkachse 23 verschwenkbares Leitblech 24 anschließt, welches sich im bodenseitigen Bereich im Erntegulförderschacht 21 über die gesamte Fläche zwischen der Häckseltrommel 14 und der Nachzerkleinerungseinrichtung 16 erstreckt, Insbesondere wenn problematisches Erntegut 10 bzw. übermäßig hohe Erntegutmengen aufgenommen werden, kann es zu Überlastungen der Häckseltrommel 14 bzw. der nachfolgenden Bearbeitungsorgane 16, 17, 20 kommen, so dass dann ein optimaler Weitertransport des Erntegutes 10 nicht mehr gewährleistbar ist und infolgedessen Verstopfungen einerseits in den nachfolgenden Bearbeitungsorganen 16, 17, 20 selbst aber auch im Erntegutförderschacht 21 auftreten können, Erfindungsgemäß ist nun bodenseitig im Erntegutförderschacht 21 im Bereich zwischen der Häckseltrommel und der nachgeordneten Nachzerkleinerungseinrichtung 16 ein um eine horizontale Schwenkachse 23 von einer geschlossenen in eine geöffnete Position verschwenkbares Leitblech 24 vorgesehen. Fig. 2 zeigt das Leitblech in einer nach unten um die Schwenkachse 23 verschwenkte, eine Auslassöffnung 25 offenbarende Position. Eine besonders zweckmäßige Ausführung ergibt sich, wenn wie im Ausführungsbeispiel dargestellt bodenseitig mittig im unteren Bereich des Leitblechs 24 ein als Getriebesystem 26 ausgebildeter mit dem Rahmen 3 des Feldhäckslers 1 (nicht dargestellt) in Verbindung stehender Verschwenkmechanismus 27 zum Verschwenken des Leitblechs 24 von einer geschlossenen in eine geöffnete Position vorgesehen ist Das Getriebesystem 26 weist ein als Hydraulikzylinder 28 ausgebildetes teleskopierbares Stellglied 29 auf, so dass das Leitblech 24 auf konstruktiv einfache Weise möglichst schnell von der geschlossen in die geöffnete Position und umgekehrt verschwenkbar ist. Das Getriebesystem 26 weist ein einen Endes über eine Haltevorrichtung 30 mit der Bodenseite des Leitblechs 24 drehbar verbundenes teleskopierbares Stellglied 29 auf, welches anderen Endes über eine weitere Haltevorrichtung (nicht dargestellt) drehbar mit dem Rahmen 3 des Feldhäckslers 1 in Wirkverbindung steht. Denkbar ist zudem ,dass das teleskopierbare Stellglied 29 als elektrischer oder elektronischer Linearmotor 31 ausgeführt, um das Verschwenken des Leitblechs 24 von der geschlossenen in die geöffnete Position und umgekehrt möglichst schnell und exakt ausführen zu können.

In bevorzugter Ausführung erfolgt das Verschwenken des Leitblechs 24 von der geschlossenen in die geöffnete Position, wenn die Häckseltrommel 14 von der in Fig. 1 dargestellten Antriebseinheit 32 entkoppelt und/oder die Antriebseinheit 32 abgeschaltet ist, so dass einerseits im Fall, dass wenn die Häckseltrommel 14 in eine Außer-Betrieb Position gebracht wird und eventuell noch aufgrund dessen Nachlauf noch Erntegutreste 10 in den Erntegutförderschacht 21 weiter befördert, die jedoch nicht mehr in den Wirkbereich der nachfolgenden Bearbeitungsorgane 16,17, 20 gelangen, dann über das in die geöffnete Position verschwenkte Leitblech 24 nach unten heraus fallen können, Andererseits kann es vorkommen, dass nach einem Erntebetrieb Erntegutablagerungen im Erntegutförderschacht 21 zwischen der Häckseltrommel 14 und der nachfolgenden Nachzerkleinerungsvorrichtung 16 auftreten, die dann, indem das Leitblech 24 nach jeden Abschalten der Antriebseinheit 32 in die geöffnete Position verschwenkt wird, beseitigt werden können. Denkbar ist zudem, dass das Verschwenken des Leitblechs 24 von der geschlossenen in die geöffnete Position an den Reversiervorgang der Häckseltrommel 14 bzw. an den Schleifvorgang zum Schleifen der an der Häckseltrommel 14 angeordneten Häckselmesser 13 gekoppelt ist, so dass einerseits noch möglicherweise während des Reversiervorgangs in den Erntegutförderschacht 21 beförderte Erntegutreste 10 über das geöffnete Leitblech 24 nach unten aus dem Erntegutförderschacht 21 herausfallen können, Andererseits kann im hier nicht näher ausgeführten Fall, Wasser, dass zum Schleifen der Häckselmesser 13 verwendet wird, durch die Auslassöffnung 25 im Erntegutförderschacht 21 herauslaufen, so dass im Erntegutförderschacht 21 keine Wasserrückstände verbleiben, die ein, verstärktes Anhaften des Erntegutes 10 im Erntegutforderschacht 21 bewirken können. Andererseits können Reste vom Schleifstein (nicht dargestellt) aus dem Erntegutförderschacht 21 herausfallen, so dass diese nicht mit in das Erntegut 10 gelangen,

In vorteilhafter Weise befindet sich wenigstens ein am Häckseltrommelgehäuse 19 angeordneter als Körperschallempfänger betreibbarer Sensor 33 zum Registrieren von im Erntegut 10 vorhandenen Fremdkörpern. Im Ausführungsbeispiel befinden sich der wenigstens eine Sensor 33 unmittelbar am Bodenblech 22 des Häckseltrommelgehäuses 19, um dass in der Häckseltrommel 14 gehäckselte Erntegut 10 sensorisch zu erfassen. Das von dem wenigstens einen Sensor 33 generierte Eingangssignal X wird an eine an sich bekannte und deshalb hier nicht näher dargestellte Auswerte- und Steuereinrichtung übermittelt, Die Auswerte- und Steuereinrichtung steht in Wirkverbindung mit dem teleskopierbaren Stellglied 29 des als Getriebesystem 26 ausgebildeten Verschwenkmechanismus. Aufgrund des generierten Eingangssignafs X ermittelt die Auswerte- und Steuereinrichtung ein die Verschwenkung des Leitblechs 24 von der geschlossenen in die geöffnete Position auslösendes Ausgangssignal Y. Dadurch können die durch den Sensor 33 registrierten Fremdkörper bei geöffneter Position des Leitblechs 24 durch die Auslassöffnung 25 herausfallen und somit größere Schäden an den nachfolgenden Bearbeitungsorganen 16, 17, 20 verhindert werden,

In einer weiteren vorteilhaften Ausgestaltung der Erfindung ist hier nicht näher dargestellt wenigstens an der Hackseltrommel 14 und/oder an den nachfolgenden Bearbeitungsorganen 16, 17, 20 wenigstens ein Sensor 34 zur Erkennung des Drehmomentes angeordnet, wobei beim Überschreiten eines vorab definierten Drehmoments das Verschwenken des Leitblechs 24 von der geschlossenen in die geöffnete Position erfolgt, so dass sichergestellt ist, dass möglicherweise infolge von Überlastungen der Häckseltrommel 14 und der nachfolgenden Bearbeitungsorgane 16,17, 20 sich ergebende Erntegutstauungen frühzeitig erkannt bzw. verhindert werden können, indem das Erntegut 10 dann, bevor es den Erntegutförderschacht 21 verstopft über das geöffnete Leitblech 24 herausfallen kann.

Im einfachsten Fall (hier nicht gezeigt) erfolgt das Verschwenken manuell vom Bediener 6 oder automatisch mittels einer Auswerte- und Steuereinrichtung (nicht dargestellt), vorzugsweise ist dabei innerhalb der dem Feldhäcksler 1 zugeordneten Fahrerkabine 8 eine Bedieneinheit 7 zur Bedienung des Verschwenkmechanismus 27 vorhanden, so dass der Bediener 6 jederzeit ein manuelles Verschwenken des Leitblechs 24 von der geschlossenen in die geöffnete Position vornehmen kann, um auf sich anbahnende Verstopfungen im Erntegutförderschacht 21 reagieren zu können. Zudem ist denkbar in der Fahrerkabine 8 Signalmittel (nicht dargestellt) zum Anzeigen der aktuellen Position des Leitblechs 24 anzuordnen, so dass der Bediener 6 stets über die aktuelle Verschwenkposition des Leitblechs 24 informiert ist.

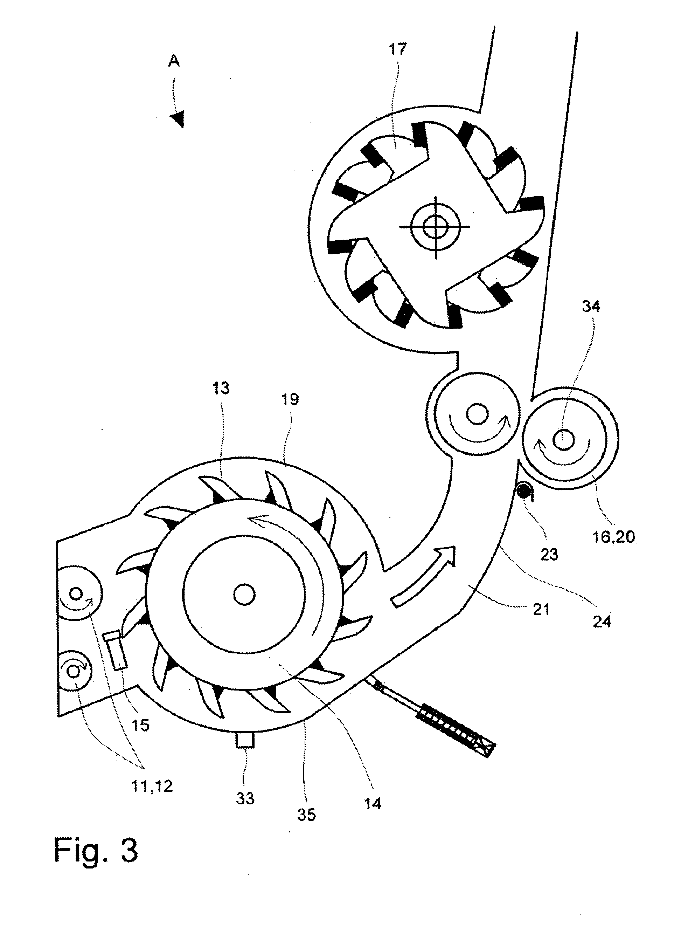

Fig. 3 entspricht der Darstellung der Fig. 2, wobei sich nun das um die horizontale Schwenkachse 23 vertikal von einer geöffneten in eine geschlossene Position verschwenkbare Leitbleich 24 in geschlossener Position befindet. Dabei überdeckt der untere endseitige Bereich des Leitblechs 24 das dem Häckseltrommelgehäuse 19 zugeordnete Bodenblech 22, welches gleichzeitig als Anschlag 35 für das Leitbleich 24 beim Einnehmen der geschlossenen Position dient, In einer weiteren hier nicht näher dargestellten Ausführung ist neben dem Leitblech 24 auch das Bodenblech 22 über eine Schwenkachse mittels eines Verschwenkmechanismus schwenkbar ausgeführt. Dabei befindet sich die horizontale Achse am oberen Ende des Bodenblechs 22 . Im Zusammenwirken mit dem verschwenkbaren Leitblech kann so eine vergrößerte Auslassöffnung am tiefsten Punkt im Erntegutförderschacht 21 erreicht werden, um die bereits beschriebenen Nachteile beseitigen zu können.

Diese Erfindung ist nicht auf das beschriebene Ausführungsbeispiel beschränkt, das auf vielfache Weise abgewandelt werden kann.

### Bezugszeichenliste

- 1: selbstfahrender Feldhäcksler
- 2: landwirtschaftliche Erntemaschine
- 3: Rahmen
- 4: Räder
- 5: Räder
- 6: Bediener
- 7: Bedieneinheit
- 8: Fahrerkabine
- 9: Vorsatzgerät
- 10: Erntegut
- 11: Einzugs- und Vorpresswalzen
- 12: Einzugs- und Vorpresswalzen
- 13: Häckselmesser
- 14: Häckseltrommel
- 15: Gegenschneide
- 16: Nachzerkleinerungseinrichtung
- 17: Nachbeschleunigungsorgan
- 18: Überladevorrichtung
- 19: Häckseltrommelgehäuse
- 20: Konditionierwalzen
- 21: Erntegutförderschacht
- 22: Bodenblech
- 23: Schwenkachse
- 24: Leitblech
- 25: Auslassöffnung
- 26: Getriebesystem
- 27: Verschwenkmechanismus
- 28: Hydraulikzylinder
- 29: teleskopierbares Stellglied
- 30: Haltevorrichtung
- 31: Linearmotor
- 32: Antriebseinheit
- 33: Sensor
- 34: Sensor
- 35: Anschlag

- X: Eingangssignal
- Y: Ausgangssignal

## Patentansprüche

1. Landwirtschaftliche Erntemaschine (2), insbesondere Feldhäcksler (1), aufbauend auf einen Rahmen (3), mit einer Antriebseinheit (19), mit einem das Erntegut (10) einer nachgeschalteten Häckseltrommel (14) zuleitenden Einzugsorgan und einer der Häckseltrommel (14) nachgeordneten Nachzerkleinerungseinrichtung (16), wobei der Häckseltrommel (14) ein teilweise umhüllendes und an das Leitblech (24) im Erntgutförderschacht (21) angrenzendes Bodenblech (22) zugeordnet ist,
**dadurch gekennzeichnet,**
**dass** das bodenseitig im Erntegutförderschacht (21) im Bereich zwischen der Häckseltrommel (14) und der nachgeordneten Nachzerkleinerungseinrichtung (16) vorhandene Leitblech (24) zum Verschwenken einen als Getriebesystem (26) ausgebildeten Verschwenkmechanismus (27) umfasst, wobei das Getriebesystem (26) ein teleskopierbares Stellglied (28, 29, 31) aufweist, so dass das Leitblech (24) um eine horizontale Schwenkachse (23) vertikal von einer geschlossenen in eine geöffnete Position und umgekehrt verschwenkbar ist, damit bei Verstopfungen dort entstehende Erntegutablagerungen bei geöffneter Position des Leitblechs (24) nach unten herausfallen können, wobei das Verschwenken des Leitblechs (24) von der geschlossenen in die geöffnete Position erfolgt, wenn die Häckseltrommel (14) von der Antriebseinheit (19) entkoppelt und/oder die Antriebseinheit (19) abgeschaltet ist.

2. Landwirtschaftliche Erntemaschine (2) nach Anspruch 1,
**dadurch gekennzeichnet,**
**dass** das Leitbleich (24) sich über die gesamte Bodenseite des Erntegutförderschachtes (21) im Bereich zwischen der Häckseltrommel (14) und der nachgeordneten Nachzerkleinerungseinrichtung (16) erstreckt.

3. Landwirtschaftliche Erntemaschine (2) nach Anspruch 1 oder 2,
**dadurch gekennzeichnet,**
**dass** sich die Schwenkachse (23) am oberen Ende des Leitblechs (24) befindet.

4. Landwirtschaftliche Erntemaschine (2) nach einem der Ansprüche 1 bis 3,
**dadurch gekennzeichnet,**
**dass** das Getriebesystem (26) im Wesentlichen von wenigstens einem einen Endes über eine Haltevorrichtung (30) mit dem Leitblech (24) des Erntegutfördeschachtes (21) drehbar verbundenen Getriebeglied (26) gebildet wird, welches anderen Endes über eine weitere Haltevorrichtung drehbar mit dem Rahmen (3) verbunden ist.

5. Landwirtschaftliche Erntemaschine (2) nach einem der Ansprüche 1 bis 4,
**dadurch gekennzeichnet,**
**dass** es sich bei dem wenigstens einen Getriebeglied um das teleskopierbare Stellglied (29) handelt, wobei das teleskopierbare Stellglied (29) als Hydraulikzylinder (28) oder Linearmotor (31) ausgeführt ist.

6. Landwirtschaftliche Erntemaschine (2) nach einem der Ansprüche 1 bis 5,
**dadurch gekennzeichnet,**
**dass** das Verschwenken des Leitblechs (2) von der geschlossenen in die geöffnete Position beim Reversieren der Häckseltrommel (14) erfolgt.

7. Landwirtschaftliche Erntemaschine (2) nach einem der Ansprüche 1 bis 6,
**dadurch gekennzeichnet,**
**dass** das Verschwenken des Leitblechs (24) von der geschlossenen in die geöffnete Position während des Schleifens der an der Häckseltrommel (14) angeordneten Häckselmesser (13) erfolgt.

8. Landwirtschaftliche Erntemaschine (2) nach einem der Ansprüche 1 bis 7,
**dadurch gekennzeichnet,**
**dass** wenigstens ein Sensor (33) an zumindest einer Stelle innerhalb des Häckseltrommelgehäuses (19) angebracht ist und der Sensor (33) als Körperschallempfänger betreibbar ist, wobei das Verschwenken des Leitblechs (24) von der geschlossenen in die geöffnete Position aufgrund des von dem Sensor (33) generierten Sensorsignals X erfolgt.

9. Landwirtschaftliche Erntemaschine (2) nach einem der Ansprüche 1 bis 8,
**dadurch gekennzeichnet,**
**dass** wenigstens an der Häckseltrommel (14) und/oder an den nachfolgenden Bearbeitungsorganen (16,17,20) wenigstens ein Sensor (34) zur Erkennung des Drehmomentes angeordnet ist, wobei beim Überschreiten eines vorab definierten Drehmoments das Verschwenken des Leitblechs (24) von der geschlossenen in die geöffnete Position erfolgt.

10. Landwirtschaftliche Erntemaschine (2) nach einem der Ansprüche 1 bis 9,
**dadurch gekennzeichnet,**
**dass** das Verschwenken des Leitblechs (24) manuell vom Bediener (6) oder automatisch mittels einer Auswerte- und Steuereinrichtung erfolgt.

11. Landwirtschaftliche Erntemaschine (2) nach einem der Ansprüche 1 bis 10,
**dadurch gekennzeichnet,**
**dass** innerhalb der dem Feldhäcksler (1) zugeordneten Fahrerkabine (8) eine Bedieneinheit (7) zur Bedienung des Verschwenkmechanismus (27) vorgesehen ist.

## Claims

1. An agricultural harvesting machine (2), in particular a forage harvester (1), constructed on a frame (3), having a drive unit (19), an intake member feeding the crop material (10) to a downstream-disposed chopping drum (14), and a post-comminuting device (16) arranged downstream of the chopping drum (14), wherein associated with the chopping drum (14) is a partially enclosing bottom plate (22) adjoining the guide plate (24) in the crop material conveyor shaft (21),
**characterised in that**
the guide plate (24) provided at the bottom side in the crop material conveyor shaft (21) in the region between the chopping drum (14) and the downstream-disposed post-comminuting device (16) for pivotal movement includes a pivoting mechanism (27) in the form of a transmission system (26), wherein the transmission system (26) has a telescopic control member (28, 29, 31) so that the guide plate (24) is pivotable about a horizontal pivot axis (23) vertically from a closed into an opened position and vice-versa so that crop material deposits occurring there in the event of blockages can drop out downwardly in the opened position of the guide plate (24), wherein the pivotal movement of the guide plate (24) from the closed into the opened position is effected when the chopping drum (14) is uncoupled from the drive unit (19) and/or the drive unit (19) is switched off.

2. An agricultural harvesting machine (2) according to claim 1 **characterised in that** the guide plate (24) extends over the entire bottom side of the crop material conveyor shaft (21) in the region between the chopping drum (14) and the downstream-disposed post-comminuting device (16).

3. An agricultural harvesting machine (2) according to claim 1 or claim 2 **characterised in that** the pivot axis (23) is at the upper end of the guide plate (24).

4. An agricultural harvesting machine (2) according to one of claims 1 to 3 **characterised in that** the transmission system (26) is substantially formed by at least one transmission member (26) rotatably connected at one end by way of a holding device (30) to the guide plate (24) of the crop material conveyor shaft (21) and which at the other end is connected rotatably to the frame (3) by way of a further holding device.

5. An agricultural harvesting machine (2) according to one of claims 1 to 4 **characterised in that** the at least one transmission member is the telescopic control member (29), the telescopic control member (29) being in the form of a hydraulic cylinder (28) or a linear motor (31).

6. An agricultural harvesting machine (2) according to one of claims 1 to 5 **characterised in that** the pivotal movement of the guide plate (2) from the closed into the opened position is effected upon reversal of the chopping drum (14).

7. An agricultural harvesting machine (2) according to one of claims 1 to 6 **characterised in that** the pivotal movement of the guide plate (2) from the closed into the opened position is effected during grinding of the chopping blades (13) on the chopping drum (14).

8. An agricultural harvesting machine (2) according to one of claims 1 to 7 **characterised in that** at least one sensor (33) is disposed at at least one location within the chopping drum housing (19) and the sensor (33) is operable as a solids-borne sound receiver, wherein the pivotal movement of the guide plate (24) from the closed into the opened position is effected on the basis of the sensor signal X generated by the sensor (33).

9. An agricultural harvesting machine (2) according to one of claims 1 to 8 **characterised in that** at least one sensor (34) for detecting the torque is arranged at least at the chopping drum (14) and/or at the following processing members (16, 17, 20), wherein when a previously defined torque is exceeded the pivotal movement of the guide plate (24) from the closed into the opened position is effected.

10. An agricultural harvesting machine (2) according to one of claims 1 to 9 **characterised in that** the pivotal movement of the guide plate (24) is effected manually by the operator (6) or automatically by means of an evaluation and control device.

11. An agricultural harvesting machine (2) according to one of claims 1 to 10 **characterised in that** provided within the driving cab (8) associated with the forage harvester (1) is an operating unit (7) for operating the pivoting mechanism (27).

## Revendications

1. Machine de récolte agricole (2), en particulier ensileuse (1), construite sur la base d'un châssis (3), dotée d'une unité d'entraînement (19), d'un organe d'alimentation amenant le produit de récolte (10) à un tambour de hachage (14) placé en aval et d'un dispositif de broyage secondaire (16) situé en aval du tambour de hachage (14), une tôle de fond (22) partiellement enveloppante et adjacente à la tôle de guidage (24) dans le canal de transport de produit de récolte (21) étant associée au tambour de hachage (14), **caractérisée en ce que** la tôle de guidage (24) qui est présente du côté fond dans le canal de transport de produit de récolte (21), dans la zone comprise entre le tambour de hachage (14) et le dispositif de broyage secondaire (16) situé en aval, comprend un mécanisme de pivotement (27) conçu comme un système de transmission (26), lequel système de transmission (26) comporte un organe d'actionnement télescopique (28, 29, 31), de sorte que la tôle de guidage (24) peut pivoter verticalement autour d'un axe de pivotement horizontal (23) depuis position fermée vers une position ouverte et inversement, afin que des dépôts de produit de récolte qui se forment à cet endroit en cas d'engorgements puissent tomber vers le bas lorsque la tôle de guidage (24) se trouve dans la position ouverte, le pivotement de la tôle de guidage (24) de la position fermée vers la position ouverte se produisant lorsque le tambour de hachage (14) est découplé de l'unité d'entraînement (19) et/ou lorsque l'unité d'entraînement (19) est arrêtée.

2. Machine de récolte agricole (2) selon la revendication 1, **caractérisée en ce que** la tôle de guidage (24) s'étend sur tout le côté fond du canal de transport de produit de récolte (21) dans la zone comprise entre le tambour de hachage (14) et le dispositif de broyage secondaire (16) situé en aval.

3. Machine de récolte agricole (2) selon la revendication 1 ou 2, **caractérisée en ce que** l'axe de pivotement (23) se trouve à l'extrémité supérieure de la tôle de guidage (24).

4. Machine de récolte agricole (2) selon l'une des revendications 1 à 3, **caractérisée en ce que** le système de transmission (26) est formé essentiellement par au moins un organe de transmission (26) relié par une extrémité, au moyen d'un dispositif de retenue (30), de façon rotative à la tôle de guidage (24) du canal de transport de produit de récolte (21), lequel organe de transmission est relié par l'autre extrémité, au moyen d'un autre dispositif de retenue, de façon rotative au châssis (3).

5. Machine de récolte agricole (2) selon l'une des revendications 1 à 4, **caractérisée en ce que** ledit au moins un organe de transmission est l'organe d'actionnement télescopique (29), lequel organe d'actionnement télescopique (29) est réalisé sous la forme d'un vérin hydraulique (28) ou d'un moteur linéaire (31).

6. Machine de récolte agricole (2) selon l'une des revendications 1 à 5, **caractérisée en ce que** le pivotement de la tôle de guidage (2) de la position fermée vers la position ouverte se produit lors de l'inversion du sens de rotation du tambour de hachage (14).

7. Machine de récolte agricole (2) selon l'une des revendications 1 à 6, **caractérisée en ce que** le pivotement de la tôle de guidage (24) de la position fermée vers la position ouverte se produit pendant l'affûtage des couteaux hacheurs (13) disposés sur le tambour de hachage (14).

8. Machine de récolte agricole (2) selon l'une des revendications 1 à 7, **caractérisée en ce qu'**au moins un capteur (33) est disposé en au moins un endroit à l'intérieur du carter de tambour de hachage (19) et le capteur (33) peut être utilisé comme récepteur de bruit de structure, le pivotement de la tôle de guidage (24) de la position fermée vers la position ouverte se produisant en réponse au signal de capteur X généré par le capteur (33).

9. Machine de récolte agricole (2) selon l'une des revendications 1 à 8, **caractérisée en ce qu'**au moins un capteur (34) pour la détection du couple est disposé au moins sur le tambour de hachage (14) et/ou sur les organes de traitement (16, 17, 20) suivants, le pivotement de la tôle de guidage (24) de la position fermée vers la position ouverte se produisant en cas de dépassement d'un couple préalablement défini.

10. Machine de récolte agricole (2) selon l'une des revendications 1 à 9, **caractérisée en ce que** le pivotement de la tôle de guidage (24) est effectué manuellement par l'opérateur (6) ou automatiquement au moyen d'un dispositif d'analyse et de commande.

11. Machine de récolte agricole (2) selon l'une des revendications 1 à 10, **caractérisée en ce qu'**une unité de commande (7) pour la commande du mécanisme de pivotement (27) est prévue à l'intérieur de la cabine de conduite (8) associée à l'ensileuse (1).
